# EUROPEAN PATENT SPECIFICATION

(11) **EP 2 832 630 B1**
(45) Date of publication and mention of the grant of the patent: **27.04.2016**
(21) Application number: 14002589.1
(22) Date of filing: 25.07.2014
(51) Int. Cl.: B62J 15/02

(54) **Device for the simplified release of mudguard stays**
Vorrichtung zur vereinfachten Freisetzung von Kotflügelstreben
Dispositif pour simplifier la libération de support de garde-boue

(30) Priority: 01.08.2013 IT PD20130214
(43) Date of publication of application: 04.02.2015
(73) Proprietor: Eurofender s.r.l., 35136 Padova (PD) (IT)
(72) Inventor: Silvestri, Alberto, I-35136 Padova PD (IT)

(56) References cited:
- EP-A1- 2 072 386
- EP-A1- 2 258 609
- EP-A2- 0 987 173
- EP-A2- 1 834 866

## Description

This invention concerns a device for the simplified release of the stays of bicycle mudguards.

In particular, it concerns a device aimed at keeping the cyclist safe.

### Prior art

Various devices are known for the simplified release of bicycle mudguard stays.

These devices, as is well known, are necessary for the safety of the cyclist in the event of unexpected accidents.

One of these accidents might be when a bicycle wheel locks when moving, when a foreign body gets caught between the tyre of a wheel and its mudguard, preventing the wheel from rotating freely around its axis.

These devices are now outdated now, and although they had the same purpose, they released the mudguard stays leaving the free end parts exposed, with the serious danger of the cyclist getting pierced.

With the same purpose, the devices similar to the one that is the object of this invention prevent the cyclist having a serious fall with all the related consequences, in the eventuality of a sudden blocking of the rotation of the front wheel.

For this reason, it is now required, as a protection and safety feature, that said mudguard, after one of the accidents mentioned above, releases itself from its relative supports.

As was mentioned above, there are various systems on the market that make this release possible.

However, all the current devices have drawbacks that make them impractical and unusable after their safety intervention.

In fact, many of these devices are of the irreversible type that break and are destroyed after they have intervened, making their further use impossible.

Other types of these devices, even if they are not made of elements that make them unusable after they have been used, are made from many different parts that make them impractical and expensive to install. An example of said systems for release mudguard is shown in EP2072386.

Other devices detach from the frame after they have intervened, they are joined to the stays but very easily detach and fall to the ground after the separation.

Moreover, these safety devices, which are made of two or more parts that come apart during their safety intervention, do not completely restore the same safety conditions, needing to be replaced quite quickly.

Therefore, all current devices are not capable of being easily reset after they have intervened, even by the cyclist, without using special tools, and above all completely recreating the prior safety conditions.

### Purpose of the invention

An object of the device of this invention is to overcome one or more of the drawbacks of the prior art.

Another object of this invention is to make available a device for the simplified release of the mudguard stays, which is capable of taking up its original function again when required by the user, fully restoring prior safety conditions even after a safety intervention.

An even further object of this invention is to make available a device that can safely intervene after an incidence of stress of the stays with respect to the wheels.

A still further object of this invention is to make available a device that can be easily made.

An even further object of this invention is to make available a device that can be quickly installed.

Another object of this invention is that the device always remains fixed to the frame even after the mudguard stays become uncoupled.

### Description of the invention

The object of the invention is a device for holding mudguard stays with a simplified release, which is composed of two half-shells solidly fixed to the frame of a bicycle by two connecting devices passing through a hole with an axis coinciding with the two half-shells and that join together to create a housing inner suitable for receiving and retaining the eyelet of said mudguard stays, where said housing is configured so that it has at least one inclined surface facing the direction where the stays are extracted, and capable of spacing the two half-shells by means of elastic deformation, after said eyelet has been moved from its housing, affecting said inclined plane, and opening wide to let said eyelet come out, and being able to take up again its initial retention position, restoring the safety conditions.

### Advantageous characteristics of the invention

Beneficially, the device is the union of two elements to form a single piece, containing a part that joins to the frame as well as a housing for retaining the connecting eyelet of the stays, thereby facilitating the assembly, containing, in the housing created between the two elements, the eyelet of the stays and facilitating the process of joining said device to the frame.

Beneficially, the joining part and the relative connecting devices of the device do not interfere preventing the release of the stays after stress to extract the stays, and is therefore configured as a safety device, without any possibility of erroneous installation by the user, since the extraction course of the eyelet inside the device is always free.

Beneficially, the entire device always remains attached to the frame of the bicycle, facilitating the work of resetting after a safety intervention, without any piece and/or element getting lost on the ground.

Beneficially, the device, even after the release of the stays, always remains a single piece and the two half-shells always joined by the connecting devices, thereby facilitating the work to restore its original functionality without the user needing any equipment and/or tools.

Beneficially the device is equipped with first devices for connecting the device to the frame and second devices, some distance from the first ones, for connecting the half-shells together, to make the device, constructed and/or arranged on one or more flexible tabs.

Conveniently, said second connecting devices are a re-usable constraint that does not deteriorate after an intervention, because the tabs for overcoming the initial interference have sufficient elasticity both in closing the two half-shells and in opening to let the eyelet come out of its housing inside the device.

Beneficially, said device includes at least one inclined surface affected by the eyelet at least when moving in the direction it comes out after extraction stress, with also just the above-mentioned inclined surface being sufficient, therefore, to facilitate the reciprocal divergence of the two half-shells, without irreversibly damaging the structure of the device.

Beneficially, the inclination of the surface calibrates the uncoupling force needed for the extraction, being able already in the assembly stage, and also previously in the moulding stage, to provide or various intervention thresholds and the proportionality of the force required for the extraction, to adapt to the bicycle line or the type of user.

Beneficially, the two half-shells are mirror-like and/or symmetrical, facilitating the assembly work and reducing the overall costs, of moulding, production, and storage.

Beneficially, said connecting devices are included in the device, preserving their functionality from the degradation of the material exposed to the elements, to wear, to accidental bumps, namely ensuring that as a safety system it can always be ready to intervene.

Beneficially, the devices for connecting the device to the frame are the same devices for connecting the two half-shells together, simplifying the connection, reducing the costs of assembly and replacement.

Beneficially, said connecting devices carry out a pre-tensioning of the connecting part of the device, preventing that over time the continual stresses leave their relative impressions of the housings of the eyelet, creating undesired vibrations of the mudguard. Beneficially, said device is equipped with elements that guarantee the speedy restoration of the initial configuration after the elastic deformation following a safety intervention, preventing any stop to the bicycle, which can immediately take up its movement safely after the intervention, carried out manually by the user, for reconnecting the eyelet of the stays to the device of this invention. Beneficially, said above-mentioned elements are configured as tabs placed in the side part of each half-shell and that hook onto the adjacent half-shell beyond the connecting surface of the two half-shells, therefore immediately rendering the restoration intervention something that can be evaluated and seen by the user.

Beneficially, the elastic deformation required for uncoupling the device and the stays is divided as an amount for each half-shell to about the same degree, constituting the best design for exploiting the material, with a divergence of each half-shell provided in the elastic range, equal to about half of the thickness of the element that constitutes the eyelet.

This device for the simplified release of the mudguard stays is characterised, therefore, by its construction simplicity, requiring just a pair of half-shells, which when joined together facing each other, create a housing on the inside for retaining the eyelet of the stays, and also providing the devices for their divergence, letting the same eyelet come out without any part breaking or getting damaged, with the user able, therefore, without the need for any equipment, to re-insert the eyelet inside the relative housing, restoring the relative retention.

These and other objects are all attained with the device for the simplified release of mudguard stays, according to the attached claims.

### Brief description of the drawings

The technical characteristics of the invention, according to the above-mentioned aims, can be clearly found in the claims below and the benefits will be clearer in the detailed description that follows, made with reference to the attached drawings, which represent a form that is purely by way of example, and in no way restrictive, where:

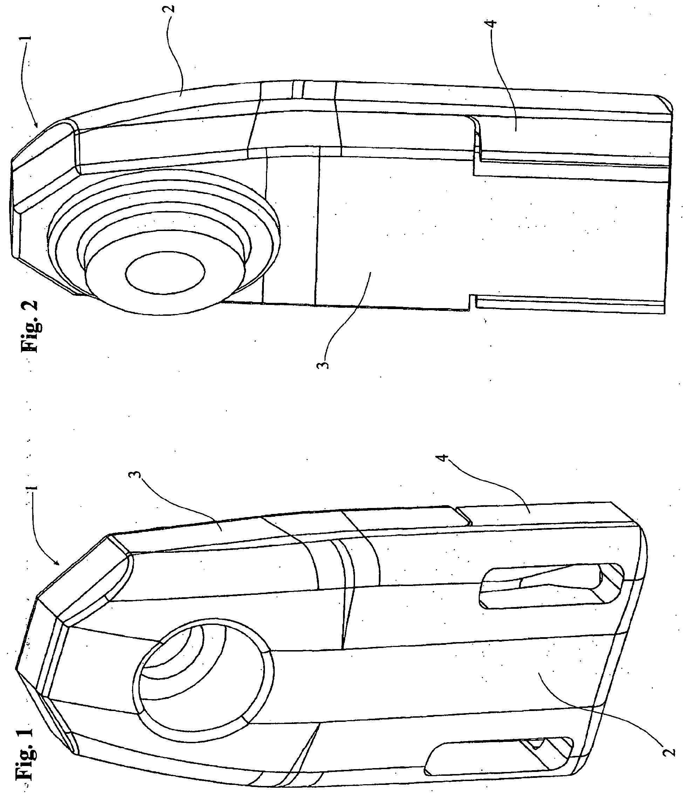

figure 1 and figure 2 show the device of the invention from two different perspectives;

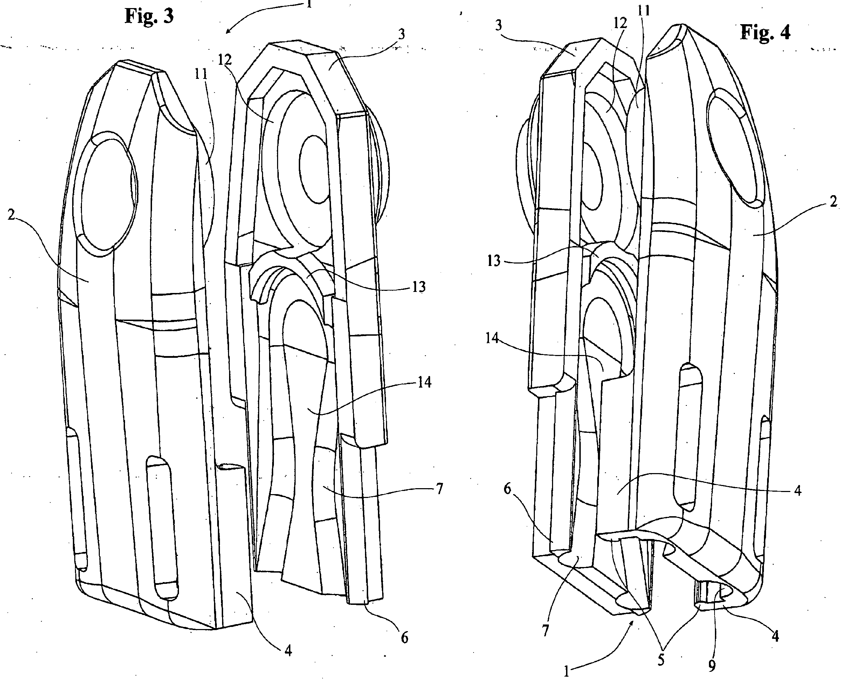

figures 4 to 6 show various views of the device of the invention, whose components are uncoupled and separated out from one another.

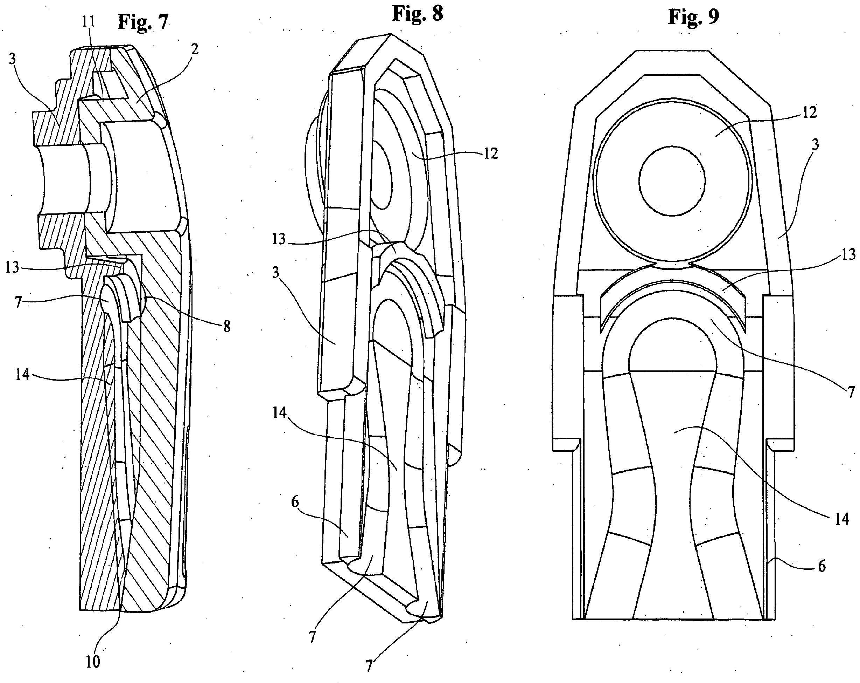

fig. 7 shows a cross-section along a vertical symmetrical plane of the device of the invention.
fig. 8 and fig. 9 show the interior of the first half-shell, respectively with a perspective view and a plan view;

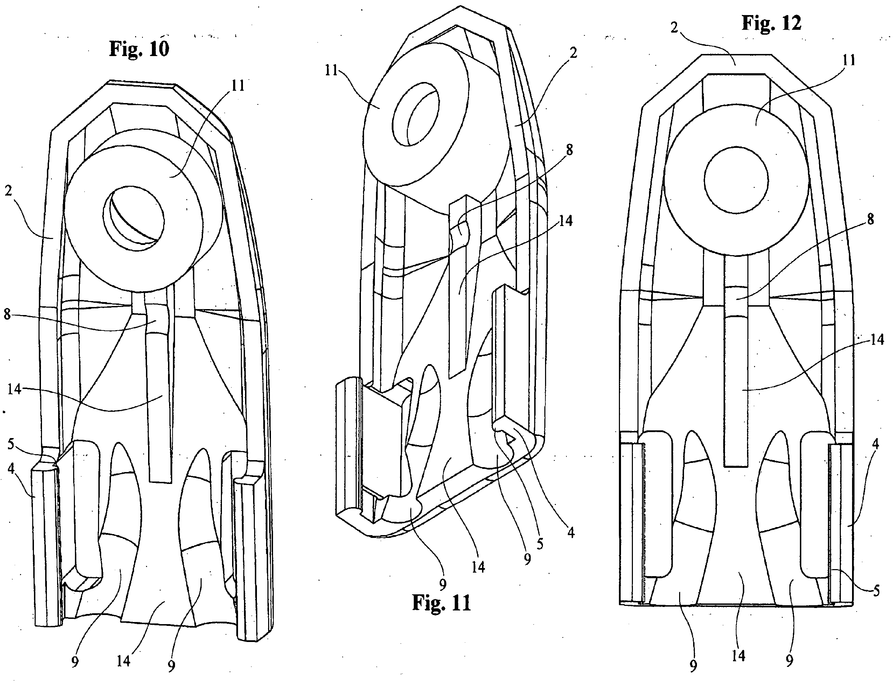

figs. 10, 11 and 12 show the inside of the second half-shell, respectively from two different perspective views and plan view.

### Detailed description of an example of a preferred realisation

The device 1 for the simplified release of mudguard stays is composed of a first half-shell 2 and a second half-shell 3.

The half-shells 2 and 3 are joined together facing one another.

The first connecting devices (not shown) join the first and second half-shells, namely the device 1 to the frame (not shown). This connection is made more solid by second connecting devices configured as a pair of tabs 4 that have teeth 5 on the ends, which after overcoming an initial interference, on the facing half-shell, join to a pair of connection teeth 6, or suitable protrusions, on the opposite half-shell.

Preferably said tabs 4 with the teeth 5 and said connecting teeth 6 are located in the area of the device near where the eyelet of the stays comes out.

It is likewise preferable that the first connecting devices be positioned passing through the part opposite the device 1 and in any event that they do not prevent the eyelet from retracting from the device 1.

The union of the two half-shells 2 and 3 create a housing 7 inside them for housing and retaining the eyelet of the stays.

Said housing 7 can remain distinct even on just one half-shell, with the inner surface of the other half-shell acting as a simple closure, or else preferably, the housing 7 is established in a shared manner entering inside the profile of the inner surface of both half-shells 2, 3.

Conveniently, said housing 7 is not established in a continuous way for its entire length, but in stretches, and even more conveniently it is established in three single sections, a central one 8 of a symmetrical housing on the eyelet and two sections of side housings 9 equally symmetrical in combination with the stays.

In this way the device 1 can easily adapt to eyelets with slightly different diameters, always with the same degree of reliability.

It is convenient that the fissure 10 at the exit of the eyelet from the device 1 is almost completely closed, preventing extraneous bodies getting inside the device 1.

It is important that the shape of the device take into consideration the exit angulation of the stays, and making sure that the housing inside the device is adequately inclined with respect to the fixing of the first devices, preventing a continual useless stress of the device 1, something that would occur if the device had a housing for the eyelet on a surface orthogonal to the one fixing to the frame.

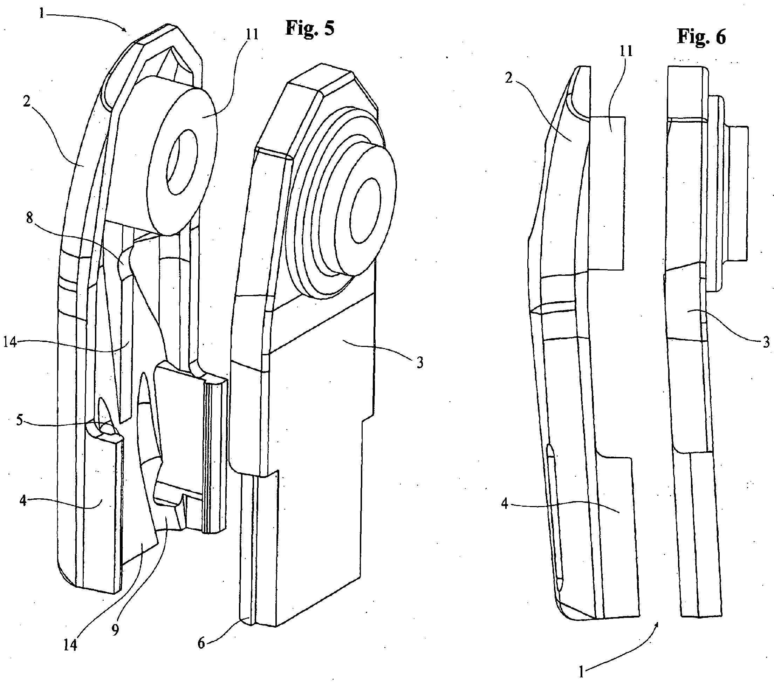

However, can clearly be seen from the side plan view of fig. 6 the part of the body of the device 1, inside which is the eyelet housing, is inclined with respect to the axis of the first connecting devices connecting the device to the frame, holding the stays, which come out from the device at the correct angle to be secured, without any residual pre-load, to the mudguard.

To facilitate the assembly, the two half-shells have a first auto-centring stop, preferably male 11 - female 12, at the first devices, and the fixing of said first devices creates the solid connection between the two full cross-section half-shells 2, 3 of the auto-centring stops.

This aspect is important for rendering this part of the device 1 solidly fixed to the frame, even in the eventuality of unexpected stresses on the device.

On the inside, on the other hand, the housing of the eyelet 7, 8 is established with an end striker 13 for the eyelet that establishes the maximum insertion inside the device 1, making the insertion of the eyelet, until it comes up against this striker 13, something simple and immediate.

After the insertion of the eyelet inside its housing 7, 8, 9, created between the two half-shells 2, 3, the user connects the second connecting devices 5, 6 by simply pressing them together.

To prevent protruding parts, which can be dangerous for the user, from coming into accidental contact with this device 1, both the profile of the device 1 and it various connecting parts are assembled inside the profile itself of the device 1.

One of the advantages of the device is the inclined surface 14 on the inner surface of one or both half-shells 2, 3.

The eyelet, when it is being extracted from the device, sliding on said inclined surface 14, with the inclination facing the fissure 10 where the eyelet comes out of the stays, distances because of elastic deformation at least one half-shell 2, 3. This elastic deformation of at least one half-shell 2, 3 creates the divergence necessary for the passage of the eyelet outside the device 1. Conveniently the presence of this inclined surface 14 on both inner surfaces allows you to obtain a symmetrical elastic deformation of both half-shells 2, 3.

Also the slope of this inclined surface 14 is important, since it allows you to obtain proportionality between the extraction stress of the eyelet with the speed of its coming out from the device 1. Also thanks to the presence of this inclined surface 14, the second connecting devices 5, 6 after the extraction solicitation of the eyelet, release themselves from the reciprocal connection, without any damage; ready to be freshly reconnected again by the user after inserting the eyelet that came out previously in the device 1.

It has been found that the device attains and carries out all the objects that have been set, achieving the results of one or more of the beneficial characteristics that it has. In particular it is easily made and assembled during the installation phase, making it easier for the installer who, in a simple and safe manner, is certain to have installed the eyelet inside the device, and facilitating the job of the safety check by looking for the presence of the exposed tabs. This device is sure to release the eyelet that is subject to unexpected stress, since the release devices are guaranteed to last, they are confined and not subject to degradation because of dirt, wear or accidental bumps.

Moreover, said device, even after the release of the eyelet, remains available and connected to the frame, without any part getting lost, and above all even in these circumstances it remains intact and ready to take up its original function, since during the extraction of the eyelet it is in no way damaged or compromised.

Finally, the user can easily reset it, even without any specific equipment, since it is just a matter of reinserting the eyelet in its housing and making sure the half-shells are closed properly with the second connecting devices, by using your hand to press one shell against the other.

## Claims

1. Device for holding mudguard stays with simplified release, comprising two half-shells (2, 3), fixed securely to the frame of a bicycle by a first coupling devices passing through holes in the two half-shells (2, 3) having coinciding axis, said two half-shells join together to establish a inner housing (7, 8, 9) suitable for receiving and retaining mudguard stays eyelet, said device (1) being **characterized in that** said inner housing (7, 8, 9) is configured so that it has at least an inclined surface (14) facing the direction where the stay is extracted; said two half-shells (2, 3) being capable of becoming separated from one another using elastic deformation following the shifting of said stay eyelet from said inner housing (7, 8, 9), said eyelet sliding over said inclined surface (14), said two half-shells opening apart to let said stay eyelet come out, but being able to take up its initial retention position again.

2. Device for holding mudguard stays with simplified release according to claim 1, **characterised by** the fact that said device (1) is the union of two elements forming a single piece comprising both a part joining to the frame and the said inner housing (7, 8, 9) for holding the eyelet joining the stays.

3. Device for holding the mudguard stays with simplified release according to claim 1, **characterised by** the fact that the pathway for extracting the eyelet inside the device (1) is always free and not obstructed by the part where the joint is and the relative joining devices.

4. Device for holding mudguard stays with simplified release according to claim 1, **characterised by** the fact that in its entirety it always remains joined to the frame of the bicycle.

5. Device for holding mudguard stays with simplified release according to claim 1, **characterised by** the fact that it is equipped with the initial devices for joining the device (1) to the frame and second devices (5, 6), spaced apart from the first devices, for joining said two half-shells (2, 3) together, forming the device (1), positioned on one or more flexible tabs (4)

6. Device for holding mudguard stays with simplified release according to the previous claim, **characterised by** the fact that said second joining devices (4, 5) are a re-usable constraint and are not negatively affected following a previous intervention.

7. Device for holding mudguard stays with simplified release according to claim 1, **characterised by** the fact that the inclination of said inclined surface (14) calibrates the dissociation force needed for extracting the stays from the eyelet.

8. Device for holding mudguard stays with simplified release according to claim 1, **characterised by** the fact that said two half-shells (2, 3) are mirror-like and/or symmetrical.

9. Device for holding mudguard stays with simplified release according to claim 1, **characterised by** the fact that the first devices for joining the device (1) to the frame are the same devices connecting said two half-shells (2,3) together.

10. Device for holding mudguard stays with simplified release according to claim 1, **characterised by** the fact that the second devices (5, 6) are positioned on the outside, visible on the envelope of the device (1).

## Patentansprüche

1. Gerät zur Halterung des Schutzbleches mit vereinfachter Freigabe, bestehend aus zwei Halbschalen (2, 3), sicher an den Rahmen eines Fahrrades festgesetzt, durch eine erste Verbindungseinrichtung von Löchern in den zwei Halbschalen (2, 3)durch eine zusammentreffende Achse, treten besagte zwei Halbschalen zusammen und verbinden sich zu einem inneren Gehäuse (7, 8, 9) geeignet zum erhalten und zurückhalten der Schutzblech Öse, besagtes Gerät (1) gekennzeichnet im inneren Gehäuse (7, 8, 9) ist so konfiguriert, dass es zumindest geneigten Untergrund hat(14) in die Richtung schauend in der die Strebe extrahiert ist; besagte zwei Halbschalen (2, 3) sind in der Lage durch elastische Verformung von einander getrennt zu werden gefolgt von der Verschiebung der genannten Öse aus besagtem inneren Gehäuse (7, 8, 9), besagte Öse gleitet über besagten geneigtem Untergrund (14), besagte zwei Halbschalen öffnen sich auseinander um besagte Öse herauszulassen, aber um in der Lage zu sein, seine anfängliche zurückhaltende Position wieder aufnehmen zu können.

2. Gerät zur Halterung des Schutzbleches mit vereinfachter Freigabe nach Anspruch 1, **gekennzeichnet durch** die Tatsache das besagtes Gerät (1) die Vereinigung der beiden Elemente ist, die ein einziges Stück formen, welches den Rahmen und besagtes innere Gehäuse umfasst (7, 8, 9) zur Halterung der Öse die der Verankerung beitritt.

3. Gerät zur Halterung des Schutzbleches mit vereinfachter Freigabe nach Anspruch 1, **gekennzeichnet durch** die Tatsache, dass der Weg zum Extrahieren der Öse im Inneren des Geräts (1) immer frei ist und nicht **durch** den Teil wo sich das Gelenk, und die relative Fügetechnik Geräte befinden, behindert wird.

4. Gerät zur Halterung des Schutzbleches mit vereinfachter Freigabe nach Anspruch 1, **gekennzeichnet dadurch, dass** es in seiner Gesamtheit immer an den Rahmen des Fahrrades verbunden bleibt.

5. Gerät zur Halterung des Schutzbleches mit vereinfachter Freigabe nach Anspruch 1, **gekennzeichnet dadurch, dass** es mit den ersten Geräten ausgestattet ist zur Verbindung des Gerätes (1) mit dem Rahmen und zweitere Geräte (5, 6), die mit Abstand zu den ersten Geräten gesetzt, die Verbindung der besagten zwei Halbschalen (2, 3) zusammenfügen, bilden das Gerät (1), positioniert auf einer oder mehreren flexiblen Schlaufen (Tabs) (4).

6. Gerät zur Halterung des Schutzbleches mit vereinfachter Freigabe gemäß des vorherigen Anspruches, zeichnet sich durch die Tatsache aus, das besagte zweite Fügetechnik Geräte (4, 5) eine wieder verwendbare Einschränkung sind und nach einem vorherigen Eingriff nicht negativ betroffen sind.

7. Gerät zur Halterung des Schutzbleches mit vereinfachter Freigabe nach Anspruch 1, **gekennzeichnet dadurch, dass** die Neigung des besagten geneigtem Untergrund (14) die Dissoziation Kraft kalibriert, die zum Extrahieren der Ankerung von der Öse benötigt wird.

8. Gerät zur Halterung des Schutzbleches mit vereinfachter Freigabe nach Anspruch 1, **gekennzeichnet durch** die Tatsache, dass die besagten zwei Halbschalen (2, 3) spiegelgleich und/oder symmetrisch sind.

9. Gerät zur Halterung des Schutzbleches mit vereinfachter Freigabe nach Anspruch 1, **gekennzeichnet dadurch, dass** die ersten Geräte zur Verbindung des Gerätes (1) an den Rahmen, dieselben Geräte sind, die die zwei Halbschalen (2,3) verknüpfen.

10. Gerät zur Halterung des Schutzbleches mit vereinfachter Freigabe nach Anspruch 1, **gekennzeichnet dadurch, dass** die zweiten Geräte (5, 6) außen auf dem Umschlag des Geräts sichtbar positioniert sind (1).

## Revendications

1. Dispositif pour le retient des tiges de support de garde-boue avec décrochage facilité comprenant deux demi-couches (2, 3), solidement fixées au cadre d'une bicyclette grâce à des premiers moyens d'assemblage passant à travers des trous dans les deux demi-couches (2, 3) ayant des tiges correspondantes, lesdits deux demi-couches s'assemblent pour définir à leur intérieur un logement (7, 8, 9) indiqué pour l'accueil et le retient de l'oeillet des tiges de support de garde-boue, ledit dispositif (1) étant **caractérisé par le fait que** ledit logement intérieur (7, 8, 9,) est configuré de manière telle à posséder au moins un plan incliné (14) tourné en direction de la sortie pour l'extraction des tiges, les dites deux demi-couches (2, 3) sont en mesure de se distancer par déformation élastique, à la suite du mouvement d'extraction dudit oeillet de son logement intérieur (7, 8, 9), ledit oeillet glisse sur le dit plan incliné (14), et lesdites deux demi-couches s'écartent pour laisser sortir ledit oeillet, tout en pouvant reprendre à nouveau la configuration initiale de retient.

2. Dispositif pour le retient des tiges de support de garde-boue avec décrochage facilité selon la revendication 1 **caractérisé par le fait que** ledit dispositif (1) est l'assemblage de deux éléments pour former une seule pièce comprenant soit une partie d'assemblage avec le cadre, soit le logement (7, 8, 9) de retient de l'oeillet d'assemblage des tiges.

3. Dispositif pour le retient des tiges de support de garde-boue avec décrochage facilité selon la revendication 1 **caractérisé par le fait que** le parcours d'extraction de l'oeillet entre le dispositif (1) est toujours libre et non entravé de la partie d'assemblage et des moyens relatifs à l'assemblage du dispositif.

4. Dispositif pour le retient des tiges de support de garde-boue avec décrochage facilité selon la revendication 1 **caractérisé par** le fait de demeurer dans sa totalité toujours assemblé au cadre de la bicyclette.

5. Dispositif pour le retient des tiges de support de garde-boue avec décrochage facilité selon la revendication 1 **caractérisé par** le fait d'être équipé de premiers moyens d'assemblage du dispositif (1) au cadre et de seconds moyens d'assemblage (5, 6), distancés des premiers moyens d'assemblage des demi-couches (2, 3) entre elles, constituant le dispositif (1), positionnés sur une ou plusieurs ailettes flexibles (4).

6. Dispositif pour le retient des tiges de support de garde-boue avec décrochage facilité selon la revendication précédente **caractérisé par le fait que** lesdits seconds moyens d'assemblage (4, 5) se présentent comme une liaison de retient réutilisable et ne se détériorent pas à la suite d'une intervention précédente.

7. Dispositif pour le retient des tiges de support de garde-boue avec décrochage facilité selon la revendication 1 **caractérisé par le fait que** l'inclination dudit plan incliné (14) calibre la force de dissociation nécessaire à l'extraction de l'oeillet des tiges.

8. Dispositif pour le retient des tiges de support de garde-boue avec décrochage facilité selon la revendication 1 **caractérisé par le fait que** les deux demi-couches (2, 3) sont spéculaires et/ou symétriques.

9. Dispositif pour le retient des tiges de support de garde-boue avec décrochage facilité selon la revendication 1 **caractérisé par le fait que** les premiers moyens d'assemblage du dispositif (1) au cadre sont les mêmes moyens d'assemblage des deux demi-couches (2, 3) entre elles.

10. Dispositif pour le retient des tiges de support de garde-boue avec décrochage facilité selon la revendication 1 **caractérisé par le fait que** les seconds moyens d'assemblage (5, 6) sont positionnés à l'extérieur de manière visible sur l'enveloppe du dispositif (1).
